(19) Europäisches Patentamt
European Patent Office
Office européen des brevets

(11) Publication number : 0 356 195 B1

# (12) EUROPEAN PATENT SPECIFICATION

(45) Date of publication of patent specification : 10.03.93 Bulletin 93/10

(51) Int. Cl.$^5$ : C09K 3/10

(21) Application number : 89308484.8

(22) Date of filing : 22.08.89

## (54) Cracking resistant resin-sealed coil.

(30) Priority : 22.08.88 JP 206348/88

(43) Date of publication of application : 28.02.90 Bulletin 90/09

(45) Publication of the grant of the patent : 10.03.93 Bulletin 93/10

(84) Designated Contracting States : DE FR GB

(56) References cited :
EP-A- 0 096 389
US-A- 3 448 079
US-A- 4 110 364

(56) References cited :
ADHESIVES AGE, April 1988, pages 27-30; A. FRANCES et al.: "Aramid pulp shows promise as high performance thixotrope"
JAPANESE PATENT OFFICE, & FILE SUPPLIER JAPS, Derwent Publications Ltd, London, GB; & JP-A-61 243 859 (JUSHI KIGATA K.K.) 30-10-1986

(73) Proprietor : MITSUBISHI GAS CHEMICAL COMPANY, INC.
5-2, Marunouchi 2-chome Chiyoda-Ku
Tokyo, 100 (JP)

(72) Inventor : Yokoi, Jun
1-1, Niijuku 6-chome
Katsushika-ku Tokyo (JP)

(74) Representative : Cropp, John Anthony David et al
MATHYS & SQUIRE 10 Fleet Street
London, EC4Y 1AY (GB)

EP 0 356 195 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a cracking resistant resin-sealed coil obtained by sealing a metal wire-wound coil which is used for a motor or transformer with a thermosetting resin composition containing specific components and particularly relates to a resin-sealed coil which does not cause occurrence of cracking in the cured resin on the basis of thermal stress, such as thermal shock.

Thermosetting resins which are flowable at a casting temperature and to which an inorganic filler, such as alumina powder or silica powder having relatively low thermal expansion and high thermal conductivity, is added have been used as electrical insulating resins for sealing coils which are used in starter motors for automobiles and airplanes. Recently, long-life resin-sealed coils which are usable at a higher temperature have been in demand. There are shortcomings in the prior resin compositions in that cracking occurs in the resin, because of thermal stress derived from the difference between the thermal expansion of the metallic material and that of the thermosetting resin composition and also because of locked-in stress caused by the cure shrinkage of the thermosetting resin composition. It has been attempted to add a rubber to the thermosetting resin composition in order to overcome the above-mentioned shortcomings. However, when a rubber is added to the thermosetting resin composition, the composition become viscous and air foam is likely to enter the resin composition. This makes the sealing operation difficult and makes the operation at elevated temperature impossible, because of lowering of the thermal resistance of the cured resin.

The present inventors conducted extensive research on the production of the cracking resistant sealing coil without increasing the viscosity of the thermosetting resin and lowering the thermal resistance of the cured resin. As a result, we have found that when a specified amount of aramid fiber pulp is added to the thermosetting resin composition, unexpectedly, the aramid fiber pulp does not act as a reinforcing agent, but as a stress relaxor, and therefore that the aramid fiber pulp-containing thermosetting resin composition is flowable and allows the cured resin having thermal resistance and cracking resistance to be formed.

This invention relates to a cracking resistant resin-sealed coil obtained by impregnating the coil with a thermosetting resin composition and curing it, characterized in that said thermosetting resin composition comprises 100 parts by volume of a thermosetting resin composition being flowable at a temperature of 100°C or less, 5 - 15 parts by volume of aramid fiber pulp (a) having a diameter of 30 μm or less and a length of 1 mm or less and 20 - 50 parts by volume of at least one inorganic filler (b), and the composition is substantially free of any solvent.

Preferable embodiments of this invention are as follows:

(i) The aramid fiber pulp (a) is treated with a surfactant;

(ii) The inorganic filler (b) contains a small amount of ultrafine particles;

(iii) The thermosetting resin is a thermal-resistant epoxy resin composition mainly comprising epoxy resin having a functionality of at least 3; and

(iv) The thermosetting resin composition mainly comprises a polyfunctional cyanate ester compound.

By the "thermosetting resin composition" which is flowable at a temperature of 100°C or less and is substantially free of any solvent is meant a thermosetting resin which is flowable at room temperature to 100°C and a resin with which a curing agent and/or a curing catalyst is mixed.

Thermosetting resins having good thermal resistance are preferred. Examples of the thermosetting resins include difunctional or polyfunctional epoxy resins, such as bisphenol A type epoxy resin, bisphenol F type epoxy resin, phenol novolak type epoxy resin, cresol novolak type epoxy resin, and tri(4-glycidoxyphenyl)methane, bis{4-(N,N-diglycidyl)aminophenyl}methane, N,N,N′,N′-tetraglycidyl-m-xylylene diamine which is tetraglycidyl of xylylene diamine; 1,2-polybutadiene resin or its derivatives; diallylphthalate resins; silicone resin; polyvinyl phenol resin; cyanate ester resins, such as cyanato resin, cyanate ester-maleimide resin, cyanate ester-maleimide-epoxy resin and cyanate ester-epoxy resin (refer to German Patent No. 1,190,184 and US Patent Nos. 4,022,755; 4,026,913; 3,448,079; 3,553,244; 3,595,900; 3,740,348; 3,694,410; 3,755,403; 4,116,946 and 4,110,364), modified maleimide resins comprising a polyfunctional maleimide, and a diamine, an epoxy compound and/or an isocyanate compound as main components [refer to Japanese Patent Publication (Kokoku) No. 8279/1973]; and isocyanate-oxazolidone resin comprising an isocyanate compound and an epoxy compound as main components. Known curing agents, such as amines, acid anhydrides, phenols, phenol novolaks, organic metal salts, organic metallic chelates or organic peroxides may be added to the thermosetting resins. Thermal resistant epoxy resin mainly comprising an epoxy resin having a functionality of at least 3 as a main component; cyanate resin mainly comprising a polyfunctional cyanate ester as a main component; cyanate ester-maleimide resin; cyanate ester-maleimide-epoxy resin; and cyanate ester-epoxy resin are preferred as the thermosetting resin.

Resins or compounds, such as silicone compounds, fluorine compounds, silane coupling agents, waxes, diene type rubbers, amorphous or low-crystallinity saturated polyester resins, urethane resin, polyvinyl acetate

resin, and polyethylene resin may be added to the thermosetting resin composition in order to impart flexibility, adhesive properties, flame retardancy, mold release properties, or defoaming properties to the thermosetting resin. Reactive low molecular weight compounds (reactive diluent) such as aromatic vinyl compound, such as styrene; acrylates, such as trimethylol propane tri(meth)acrylates; and monoglycidyl ether may be added to the thermosetting resin in an amount of less than 30% on the basis of weight of the resin composition as a viscosity modifier. Straight aromatic low molecular weight resins having a boiling point of 300°C or more and a molecular weight of 300 - 800, such as low molecular weight polystyrene, polybromo diphenyl ether and petroleum resins having a softening point of 100°C or less may be added to the thermosetting resin in order to improve high temperature steam resistance of the thermosetting resin.

Examples of aramid fiber pulp having a diameter of 30 μm or less and a length of 1 mm or less include fiber pulps composed of condensates of an aromatic diamine and an aromatic dicarboxylic acid, such as poly paraphenylene-3,4-diphenylether terephthalamide (trade name, TECHNORA, HM-50 available from Teijin Co., Ltd.) and poly paraphenylene phthalamide (trade name, Kevlar available from Du Pont). The fiber pulps are prepared by cutting short fibers with a diameter of 5 - 30 μm to less than 1 mm.

The aramid fiber pulp is added to the thermosetting resin composition in an amount of 5 - 15 parts by volume per 100 parts by volume of the resin composition. When the aramid fiber pulp is added to the resin composition in an amount of less than 5 parts by volume, occurrence of cracking in the cured resin composition cannot be completely avoided. When the aramid fiber pulp is added to the resin composition in an amount of more than 15 parts, flowability of the resulting resin composition containing the aramid fiber pulp becomes unsatisfactory.

When short fibers having a length of more than 1 mm are used, it becomes difficult to blend the resin composition with the aramid fiber pulp and flowability of the resulting resin composition with the aramid fiber pulp becomes unsatisfactory.

When the aramid fiber pulp is treated with a surfactant before blending with the resin composition, it becomes possible to uniformly blend the aramid fiber pulp with the resin composition, and occurrence of cracking in the cured resin composition can be effectively prevented.

Any of nonion, anion and cation surfactants can be used as surfactant for pretreatment. Examples of the surfactants include anion surfactants, such as higher alcohols and alkyl benzenes; cation surfactants, such as quaternary ammoniums and pyridinium compounds and nonion surfactants, such as ethers, etheresters, esters and nitrogen-containing compounds. Usually, the surfactants may be used as 1 - 10% solution in water or any organic solvent.

Preferably, the inorganic fillers have an average diameter of 50 μm or less and more preferably, 1 - 20 μm. Examples of the inorganic fillers include powder, scaly materials or whiskers of $SiO_2$, $Al_2O_3$, aluminum nitride, boron nitride, magnesium oxide, calcium oxide, mica, silicon nitride, carbon nitride or the like, or ultrafine silica. The inorganic filler may be treated with a silane coupling agent or a titanate coupling agent. The inorganic filler may be used in an amount of 20 - 50 parts by volume per 100 parts by volume of the thermosetting resin composition. When the inorganic filler is used in an amount of less than 20 parts by volume, the thermal conductivity of the cured resin composition is unsatisfactory and the filler is likely to be precipitated. When the inorganic filler is used in an amount of more than 50 parts by volume, it becomes difficult to seal the coil with the resin composition uniformly and sufficiently, because of a lowering of the flowability of the composition. The use of ultrafine silica as a part of the inorganic filler is preferable, because the aramid fiber pulp and the filler are held in the resin composition in a uniform state and runs and sags of the resin can be prevented during the thermal gelation of the resin.

The components as explained above are uniformly blended to prepare the thermosetting resin composition of this invention. The blending operation is usually easy and operation can be carried out by a mere agitation. Preferably, the blending operation can be carried by a method comprising a step of blending these components by a known kneader, such as a roll, a mixer or an extruder at one atmospheric pressure or reduced pressure for 1 minute to 10 hours and a step of heating the composition at 100°C or less, preferably 80°C or less and most preferably 50°C or less to prepare a liquid composition.

A two-pack system can be adopted from the view point of can-stability of the thermosetting resin composition. For example, a thermosetting resin and a curing agent for the resin (cyanate ester resin and epoxy resin containing a curing catalyst for the cyanate ester resin) are stored separately. The two solutions are blended just before they are used for sealing the coil.

By the "coil" in the present invention is meant that which is prepared by insulating a bare wire used in a rotary machines in generators, motors or the like and transmission and distribution apparatus, such as transformers and then by winding the insulated wire by a desired method. A single component composed of a coil as well as an integral structure of a coil and an iron core can be sealed in accordance with the present invention. The preferable coils which can be sealed in accordance with the present invention are the ones which are used

in starter motors for automobiles or airplanes.

Insulation of the bare wire may be carried out by coating with a thermal resistant resin enamel, such as polyester imide, polyamide imide, polyimide on the bare wire, or by winding glass cloth, mica paper, aramid paper or imide film on the bare wire. Mica, aramid paper, polyimide and the like can be used for insulation against the ground.

A cracking resistant resin-sealed coil of the present invention can be prepared by the following method: The method mainly comprises a step of completely impregnating the coil with the thermosetting resin of the present invention by a known immersion method, drip impregnation method, or the like at superatmospheric, one atmospheric or reduced pressure at 100°C or less, and preferably at room temperature to 80°C, a step of gelling the resin at 100°C or less, a step of curing the resin at 100 - 300°C and a step of gradually cooling the resin to obtain the resin-sealed coil of the present invention.

A typical example of the method comprises:

a step of immersing a coil into the thermosetting resin composition substantially free of solvent, preferably in vacuo;

a step of withdrawing the coil from the composition;

a step of optionally pressurizing the coil, thereby allowing the resin to penetrate inside the coil;

a step of gelling the impregnated resin at 100°C or less;

a step of curing the resin at 100 - 300°C; and

a step of cooling the resin to room temperature.

This invention is further explained by way of the following non-limiting examples. All parts are on a weight basis, unless specified as otherwise.

## Example 1

2,2-bis(4-cyanatophenyl)propane was heated at 150°C for 3 hours to obtain cyanate ester resin (hereinunder referred to as TA) having a melting point of 60°C.

TA (80 parts), triallyl isocyanurate (hereinunder referred to as TAIC) (20 parts), alumina powder having an average particle size of 7 μm (hereinunder referred to as Alumina-7) (105 parts), poly paraphenylene terephthalamide fiber pulp (trade name, APYEIL FLOCK available from Unitika Co., Ltd.) (hereinunder referred to as Aramid Pulp) having a diameter of 15 μm and a length of 0.5 mm (10 parts), bisphenyl A type epoxy resin (trade name, Epikote 828 available from Yuka Shell Epoxy Kabushiki Kaisha) (1 part) and ultrafine silica (trade name, AEROSIL available from Nippon Aerosil Co., Ltd., size of primary particles being 7 - 16 millimicron) (hereinunder referred to as Aerosil) (1 part) were blended with stirring and vacuum-defoamed to obtain a resin composition for sealing coil (thermosetting resin:Aramid Pulp:inorganic powder = 100:9:36 by volume) (hereinunder referred to as Resin A).

In a separate step, a polyamideimide resin coated copper wire having a diameter of 1 mm was wound around itself in 100 turns and the resulting ring was bound with the same copper wire at five equidistant points of the circumference so as to prepare an annular coil model having a diameter of ca. 80 mm.

Resin A was charged into a container having a depth of 150 mm, heated at 60°C, and defoamed at a reduced pressure. The above coil model was immersed in Resin A thus treated, and was impregnated with the Resin A at 60°C and 3 mmHg for 10 minutes in vacuo. The coil model was withdrawn from the Resin A, heated at 80°C for 3 hours and then 200°C for an additional 10 hours and gradually cooled to room temperature to obtain a resin-sealed coil.

Thermal shock test of the resulting coil was carried out in the following way: One cycle comprises heating the resin-sealed coil at 200°C for 30 minutes and quenching the coil to room temperature. Even when the resin-sealed coil was subjected to 100 cycle test, cracking did not occur in the resin. The resin-sealed coil was cut, and the resulting section of the resin was studied. Occurrence of cracking was not found and the fine gaps among the wires were impregnated with the resin.

The flexural strength and glass transition temperature of the cured resin were measured. The results are shown in Table 1.

## Control Run 1

The procedure of Example 1 was repeated except that Aramid Pulp and Alumina-7 powder were not used. Occurrence of cracking in the resulting resin-sealed coil was observed. The results are shown in Table 1.

Control Run 2

The procedure of Example 1 was repeated except that Aramid Pulp was not used. When the resulting resin-sealed coil was subjected to 10 cycle test, hair cracking in the resin occurred. The results are shown in Table 1.

Control Run 3

The procedure of Example 1 was repeated except that Alumina-7 powder was not used. However, Aramid Pulp was precipitated in the resin, so the coil which was uniformly sealed with the cured resin could not be obtained.* The results are shown in Table 1.

Table 1

| | | | Example 1 | | Control Run 1 | | Control Run 2 | | Control Run 3 | |
|---|---|---|---|---|---|---|---|---|---|---|
| | | | parts | ratio by volume | parts | ratio by volume | parts | ratio by volume | parts | ratio by volume |
| Component | thermo-setting resin | TA | 80 | 100 | 80 | 100 | 80 | 100 | 80 | 100 |
| | | TAIC | 20 | | 20 | | 20 | | 20 | |
| | | EP-828 | 1 | | 1 | | 1 | | 1 | |
| | inorganic filler | Alumina-7 | 105 | 36 | - | 0.34 | 105 | 36 | - | 0.34 |
| | | Aerosil | 1 | | 1 | | 1 | | 1 | |
| | Aramid pulp | | 10 | 9 | - | - | - | - | 10 | 9 |
| working properties in sealing operation | | | good | | good | | good | | * | |
| cracking resistance (times of cycle) | | | >100 | | 0 | | 10 | | | |
| flexural strength (kg/mm$^2$) | | | 7.3 | | 10 | | 9.5 | | | |
| glass transition temperature (°C) | | | 180 | | 181 | | 179 | | | |

It is apparent from Table 1 that aramid fiber pulp of this invention does not exhibit an improvement in the flexural strength of the cured resin composition, but exhibits an improvement in the cracking resistance of the cured resin composition.

Example 2

Tetrafunctional amine type epoxy resin (N,N,N′,N′-tetraglycidyl-m-xylylene-diamine, trade name Tetrad X available from Mitsubishi Gas Chemical Co., Inc.) (40 parts), methyl nadic anhydride (60 parts), silica powder having an average particle size of 13 μm (100 parts), Aerosil (1 part) and aramid fiber pulp (8 parts) as mentioned below were uniformly blended at room temperature to obtain a resin composition which is flowable at room temperature for sealing coil.

Aramid Fiber Pulp:

Branched fibrillating aramid fiber pulp having a length of 1 mm (trade name, TECHNORA T 340 available from Teijin Co., Ltd.) was immersed into a 10% by weight solution of polyoxyethylene octylphenol ether having the formula

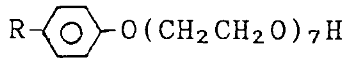

wherein R is alkyl (trade name, Type HS 204.5 available from Nippon Oil Fat Co., Ltd.) in methanol, was withdrawn and then dried at 150°C for 1 hour to obtain aramid fiber pulp.

The resin composition was charged into a container having a depth of 150 mm at room temperature, defoamed at reduced pressure. The coil was immersed in the resin composition, and was impregnated with the resin composition at 60°C and 3 mmHg for 10 minutes in vacuo. The coil was withdrawn from the resin composition, heated at 25°C for 5 hours, at 90°C for additional 2 hours and 180°C for additional 3 hours, and gradually cooled to room temperature.

The thermal shock test of the coil thus treated was carried out in the same way as Example 1. Even after 100 cycles, occurrence of cracking in the cured resin was not observed.

Control Run 4

The procedure of Example 2 was repeated except that the aramid fiber pulp was not used. After 10 cycles, the cracking in the cured resin was occurred.

Examples 3 - 4 and Control Run 5

2-2-bis(4-cyanatophenyl)propane (62 parts) and bis(4-maleimidophenyl)methane (24 parts) were blended and the mixture was heated at 150°C for 3 hours with stirring and cooled to 100°C. Trimethylolpropane triacrylate (7 parts) and triallyl isocyanurate (7 parts) were added to the resulting mixture to a resin solution having a viscosity of 40 ps (at 30°C) (hereinunder referred to as Resin B).

Resin B, alumina powder having an average particle size of 1 μm (trade name, A 30 available from Nippon Light Metal Co., Ltd.) (hereinunder referred to as Alumina-1), Aramid Pulp, Epikote 828, Aerosil or gamma-glycidoxypropyltrimethoxysilane (silane coupling agent, trade name A-187 available from Nippon Unitika Co., Ltd.) (hereinunder referred to as Silane) were blended as given in Table 2, defoamed in vacuo to obtain a resin composition for sealing coil.

The thermal shock test of the resin-sealed coil and flexural strength and glass transition temperature of the cured resin were measured in the same way as Example 1. The results are shown in Table 2.

Table 2

| Component | | Example 3 parts | Example 3 ratio by volume | Example 4 parts | Example 4 ratio by volume | Control Run 5 parts | Control Run 5 ratio by volume |
|---|---|---|---|---|---|---|---|
| thermo-setting resin | Resin B | 45 | 100 | 45 | 100 | 45 | 100 |
| | EP-828 | 5 | | 5 | | 5 | |
| | Silane | 1.5 | | 1.5 | | 1.5 | |
| inorganic filler | Alumina-1 | 50 | 28 | 50 | 28 | 50 | 28 |
| | Aerosil | 0.5 | | 0.5 | | 0.5 | |
| Aramid pulp | | 5 | 9 | 3 | 5.4 | - | - |
| working properties in sealing operation | | good | | good | | good | |
| cracking resistance (times of cycle) | | >100 | | >100 | | 10 | |
| flexural strength ($kg/mm^2$) | | 7.3 | | 9.4 | | 9.5 | |
| glass transition temperature (°C) | | 180 | | 184 | | 182 | |

It is apparent from Tables 1 and 2 that the resin-sealed coil of the present invention exhibits cracking resistance higher than the prior resin-sealed coil. The resin composition of the present invention is flowable at 100°C or less and can completely penetrate into the gaps among the wires.

As a result, cracking resistant coils which have excellent electrical insulating properties, thermal resistance

and thermal conductivity which are usable under strict conditions can be obtained in accordance with the present invention. Therefore, the present invention is very significant from an industrial view point.

## Claims

1. A cracking resistant resin-sealed coil obtained by impregnating the coil with a thermosetting resin composition and curing it, characterised in that said thermosetting resin composition comprises 100 parts by volume of a thermosetting resin composition being flowable at a temperature of 100°C or less, 5 - 15 parts by volume of aramid fiber pulp (a) having a diameter of 30 μm or less and a length of 1 mm or less and 20 - 50 parts by volume of at least one inorganic filler (b), and the composition is substantially free of any solvent.

2. The coil of Claim 1 wherein aramid fiber pulp (a) is treated with a surfactant.

3. The coil of Claim 1 or Claim 2 wherein inorganic filler (b) contains ultrafine particles.

4. The coil of any one of Claims 1 to 3 wherein the thermosetting resin composition is a thermal-resistant epoxy resin composition mainly comprising epoxy resin having a functionality of at least 3.

5. The coil of any one of Claims 1 to 3 wherein the thermosetting resin composition mainly comprises a polyfunctional cyanate ester compound.

6. A process for producing a cracking resistant resin-sealed coil which comprises:
   immersing a coil into the thermosetting resin composition of Claim 1;
   withdrawing the coil from the composition;
   optionally pressurizing the coil, thereby allowing the resin to penetrate inside the coil;
   gelling the impregnated resin at 100°C or less;
   curing the resin at 100 - 300°C; and
   cooling the resin to room temperature.

7. A thermosetting resin composition comprising 100 parts by volume of a thermosetting resin composition being flowable at a temperature of 100°C or less, 5 - 15 parts by volume of aramid fiber pulp (a) having a diameter of 30 μm or less and a length of 1 mm or less and 20 - 50 parts by volume of at least one inorganic filler (b), and the composition is substantially free of any solvent.

## Patentansprüche

1. Gegen Rißbildung beständige, in einem Harz eingesiegelte Spule, erhalten durch Imprägnieren der Spule mit einer wärmehärtbaren Harzmasse und Aushärten derselben, dadurch gekennzeichnet, daß die wärmehärtbare Harzmasse 100 Volumenteile einer bei einer Temperatur von 100°C oder darunter fließfähigen wärmehärtbaren Harzmasse, 5 bis 15 Volumenteile Aramidfaserpulpe (a) eines Durchmessers von 30 μm oder weniger und einer Länge von 1 mm oder weniger und 20 bis 50 Volumenteile mindestens eines anorganischen Füllstoffs (b) umfaßt und praktisch lösungsmittelfrei ist.

2. Spule nach Anspruch 1, wobei die Aramidfaserpulpe (a) mit einem Netzmittel behandelt ist.

3. Spule nach Anspruch 1 oder 2, wobei der anorganische Füllstoff (b) ultrafeine Teilchen enthält.

4. Spule nach einem der Ansprüche 1 bis 3, wobei die wärmehärtbare Harzmasse aus einer wärmebeständigen und im wesentlichen ein Epoxyharz einer Funktionalität von mindestens 3 umfassenden Epoxyharzmasse besteht.

5. Spule nach einem der Ansprüche 1 bis 3, wobei die wärmehärtbare Harzmasse im wesentlichen eine polyfunktionelle Cyanatesterverbindung umfaßt.

6. Verfahren zur Herstellung einer gegen Rißbildung beständigen und in einem Harz eingesiegelten Spule durch

Eintauchen einer Spule in die wärmehärtbare Harzmasse nach Anspruch 1;
Herausnehmen der Spule aus der Masse;
Gegebenenfalls unter Druck setzen der Spule, um das Harz in das Spuleninnere eindringen zu lassen;
Gelieren des imprägnierten Harzes bei 100°C oder weniger;
Härten des Harzes bei 100 bis 300°C und
Kühlen des Harzes auf Raumtemperatur.

7. Wärmehärtbare Harzmasse, umfassend 100 Volumenteile einer bei einer Temperatur von 100°C oder darunter fließfähigen wärmehärtbaren Harzmasse, 5 bis 15 Volumenteile Aramidfaserpulpe (a) eines Durchmessers von 30 µm oder weniger und einer Länge von 1 mm oder weniger und 20 bis 50 Volumenteile mindestens eines anorganischen Füllstoffs (b), die im wesentlichen lösungsmittelfrei ist.

## Revendications

1. Bobine encapsulée dans la résine résistante à la fissuration obtenue par imprégnation de la bobine d'une composition de résine thermodurcissable et son durcissement, caractérisée en ce que ladite composition de résine thermodurcissable comprend 100 parties en volume d'une composition de résine thermodurcissable qui est fluide à une température de 100°C ou moins, 5-15 parties en volume de pulpe de fibre Aramid (a) ayant un diamètre de 30 µm ou moins ou une longueur de 1 mm ou moins et 20-50 parties en volume d'au moins une charge inorganique (b), et la composition est sensiblement exempte de tout solvant.

2. Bobine de la revendication 1, où la pulpe de fibre Aramid (a) est traitée avec un agent tensio-actif.

3. Bobine de la revendication 1 ou de la revendication 2, où la charge inorganique (b) contient des particules ultrafines.

4. Bobine selon l'une quelconque des revendications 1 à 3, où la composition de résine thermodurcissable est une composition de résine époxy thermiquement résistante qui comprend principalement la résine époxy ayant une fonctionnalité d'au moins 3.

5. Bobine selon l'une quelconque des revendications 1 à 3, où la composition de résine thermodurcissable comprend principalement un composé d'ester de cyanate polyfonctionnel.

6. Procédé de production d'une bobine encapsulée dans la résine résistante à la fissuration qui comprend :
l'immersion d'une bobine dans la composition de résine thermodurcissable de la revendication 1 ;
le retrait de la bobine de la composition :
la mise sous pression facultative de la bobine, pour ainsi permettre à la résine de pénétrer à l'intérieur de la bobine ;
la gélification de la résine imprégnée à 100°C ou moins ;
le durcissement de la résine entre 100 et 300°C ; et
le refroidissement de la résine à température ambiante.

7. Composition de résine thermodurcissable comprenant 100 parties en volume d'une composition de résine thermodurcissable qui est fluide à une température de 100°C ou moins, 5-15 parties en volume de pulpe de fibre Aramid (a) ayant un diamètre de 30 µm ou moins et une longueur de 1 mm ou moins et 20-50 parties en volume d'au moins une charge inorganique (b) et la composition est sensiblement exempte de tout solvant.